# EUROPÄISCHE PATENTSCHRIFT

(11) **EP 0 732 191 B1**
(45) Veröffentlichungstag und Bekanntmachung des Hinweises auf die Patenterteilung: **05.09.2001**
(21) Anmeldenummer: 96103524.3
(22) Anmeldetag: 07.03.1996
(51) Int. Cl.: B29C 65/20

(54) **Anordnung zum Verschweissen von rohrförmigen Teilen aus thermoplastischem Kunststoff**
Apparatus for welding tubular thermoplastic elements together
Dispositif de soudage d'éléments tubulaires en matière thermoplastique

(30) Priorität: 15.03.1995 CH 73495
(43) Veröffentlichungstag der Anmeldung: 18.09.1996
(73) Patentinhaber: Georg Fischer Rohrverbindungstechnik GmbH, 78224 Singen (DE)
(72) Erfinder: Kramer, Herbert, 78224 Singen (DE)
(74) Vertreter: Weiss, Wolfgang, Dr.

(56) Entgegenhaltungen:
- EP-A- 0 376 586
- EP-A- 0 595 213
- DE-A- 2 249 317
- DE-A- 2 344 488
- DE-A- 3 539 181
- GB-A- 1 257 092
- GB-A- 2 038 436
- US-A- 4 867 835
- KLINGENFUSS H: "DURCH HEIZELEMENT-STUMPFSCHWEISSEN MM-GENAU VERBINDEN" PLASTVERARBEITER, Bd. 40, Nr. 12, 1.Dezember 1989, Seiten 88-89, XP000173514
- G. MENGES, N. EL BARBARI, G. KRETZSCHMAR: "Auf dem Weg zu automatisierbaren Fügeverfahren" PLASTVERARBEITER., Bd. 38, Nr. 12, Dezember 1987, SPEYER/RHEIN DE, Seiten 41-47, XP002048855

## Beschreibung

Die Erfindung betrifft eine Anordnung zum Verschweissen von rohrförmigen Teilen aus thermoplastischem Kunststoff, insbesondere Heizelementstumpfschweissmaschine, auf welcher Aufnahmespannvorrichtungen angeordnet und die Teile über mindestens einen Schlitten zusammenfahrbar, an einem Heizelement mit einer bestimmten Angleichkraft angleichbar, an diesem mit einer bestimmten Kraft anwärmbar und anschliessend miteinander mit einer bestimmten Fügekraft verschweissbar sind.

Beim Heizelementstumpfschweissen werden die zu verbindenden Teile im Schweissbereich auf Schweisstemperatur erwärmt und unter Druckanwendung ohne Verwendung von Zusatzwerkstoffen verschweisst. Die in einer Schweissmaschine eingespannten Teile werden mit einem spanabhebenden Hobel planparallel bearbeitet. Danach werden die Teile angeglichen. Dazu werden beide Teile gegen einen erhitzten Heizsspiegel mit einer bestimmten Angleichkraft gedrückt, bis die gegenüberliegenden Verbindungsflächen der zu verschweissenden Teile am ganzen Umfang daran anliegen und einen Wulst bilden. Nun werden zum Anwärmen die Flächen mit einer geringen Kraft gegen den Heizspiegel gedrückt, bis die zu schweissenden Teile auf eine bestimmte Temperatur erwärmt sind. Nach Ablauf der Anwärmzeit werden die Teile von dem Heizspiegel gelöst, der Heizspiegel muss ohne Berühren der beiden Schweissflächen entfernt werden. Danach müssen die Teile sofort zusammengefügt werden. Die Umstellzeit zum Herausschwenken und Fügen der Teile muss schnell erfolgen. Die Fügekraft muss zügig und auf einen genauen Wert aufgebracht werden. Die Fügekraft muss während der Abkühlzeit aufrecht erhalten werden. Unter Umständen muss ein Nachregulieren der Fügekraft erfolgen.

Problematisch ist bei solchen Schweissvorgängen, die erforderlichen Kräfte genau einzuhalten, um eine gute Schweissqualität zu erreichen. Deshalb müssen an solchen Schweissvorrichtungen die Kräfte genau ermittelbar sein.

GB-A-2308436 zeigt eine Vorrichtung zur Herstellung einer Schmelzverbindung von zwei Rohrleitungsteilen aus thermoplastischem Kunststoff. Die Vorrichtung umfasst einen Rahmen, eine feststehende Spannvorrichtung für das erste Rohrleitungsteil und eine bewegliche Spannvorrichtung für das zweite Rohrleitungsteil. Die bewegliche Spannvorrichtung mit dem zweiten Rohrleitungsteil wird mittels eines Klinkwerkes auf der feststehenden Spannvorrichtung mit dem ersten Rohrleitungsteil zu bewegt. Zwischen dem Rahmen und der feststehenden Spannvorrichtung ist eine Tellerfeder angeordnet, die bei einer kleinen Wegänderung eine relativ grosse Druckänderung erfährt. Mit der Tellerfeder soll eine Druckanzeige verbunden werden. Die Druckanzeige soll dem Arbeiter die Überwachung des Druckes, der das zweite Rohrleitungsteil auf dem ersten Rohrleitungsteil während dem Schmelzverbindungsvorgang ausübt, erleichtern. Die Druckänderung einer Tellerfeder ist in Abhängigkeit der Wegänderung verhältnismässig ungenau, nicht linear und nicht konstant im Verlauf der Lebensdauer der Vorrichtung. Eine Bewegung mittels eines Klinkwerkes ist zwar einstellbar, jedoch nicht stufenlos einstellbar.

In der DE 22 49 317 wird eine Vorrichtung zum Stumpfschweissen von Kunststoffrohren oder Formstücken gezeigt. Auf einem Grundgestell befinden sich zwei Rohrhalteeinrichtungen, die eine ist fest mit dem Gestell verbunden und die andere ist auf einem beweglichen Schlitten angeordnet. Der Schlitten ist über einen Hebel verschiebbar. Gleichzeitig wird beim Verschieben des Schlittens eine im Innern des Schlittens befindliche Feder zusammengedrückt und ein Messstab in Abhängigkeit der Federkraft aus dem Schlitten herausgedrückt. Aus der Verstellbewegung des Massstabes kann die Antriebskraft über eine Skala abgeleitet werden. Die ermittelte Antriebskraft ist diejenige Kraft, die der Benutzer am Handhebel aufbringt und die auf den Schlitten wirkt. Die Kraft, die auf die Schweissstelle wirkt, vermindert sich um die Reibkräfte der Führungen und die Schleppkraft des Rohres. Diese Messung ist ungenau, insbesondere bei kleinen Prozesskräften, denn die Federtoleranzen, die Einbautoleranzen, die Ungenauigkeit der Messskala sowie die Ableseungenauigkeit durch den Benutzer sind nicht berücksichtigt. Problematisch ist auch, dass einige Fehlerquellen je nach Einsatzbedingung variieren, z.B. die Schleppkräfte des Rohres.

Eine Schweißeinrichtung zum Verschweißen von kunststoffwerkstücken, mit einer kraftmeßeinrictung zur Erfassung der Antriebskraft wird im Dokument EP-A-0 595 213 offenbart.

Aufgabe der Erfindung ist es, eine Vorrichtung zu schaffen, mit welcher eine genaue Kraftmessung im Schweissverbindungsbereich erfolgt, um eine optimale Schweissqualität zu erreichen.

Diese Aufgabe wird dadurch gelöst, dass die erforderlichen Kräfte (Angleich-, Anwärm- und Fügekraft) von einer einstellbaren Kraft direkt auf einen Schlitten aufgebracht wird, der von den restlichen Bauteilen kräftemässig über ein Schieberteil abkoppelbar ist und die am Schieberteil wirkende einstellbare Kraft über eine Kraftmessdose übertragbar und messbar ist.

Der Vorteil der Erfindung liegt darin, dass eine sehr genaue voreingestellte Kraft auf die zu verbindenden Teile eingeleitet werden kann.

Ein weiterer Vorteil liegt darin, dass der Benutzer den Handhebel einfach in eine Endlage oder gegen einen Anschlag drückt, ohne gleichzeitig auf eine Ableseeinrichtung achten zu müssen, d.h. die Hebelbewegung muss nicht exakt bei Erreichen des Skalenwertes beendet werden.

Ist die Kraft eingestellt, muss bei gleichen Schweissverhältnissen nichts mehr geändert werden.

Vorteilhaft ist auch, dass die Messung der Kraft durch eine Kraftmessdose erfolgt und somit ein elektronisches Ausgangssignal für eine Weiterverarbeitung der Daten, beispielsweise der Dokumentation vorliegt.

Weitere vorteilhafte Ausgestaltungen der Erfindung sind in der Beschreibung von den folgenden Zeichnungen beschrieben.

Es zeigen:
- Fig.1: eine Seitenansicht einer Heizelementstumpfschweissmaschine im Schnitt,
- Fig.2: eine Draufsicht der Maschine von Fig.1 entlang dem Schnitt A-A,
- Fig.3: eine Seitenansicht der Heizelementstumpfschweissmaschine mit einem geänderten Geräteträger und
- Fig.4: den vergrösserten Ausschnitt X aus Fig 1.

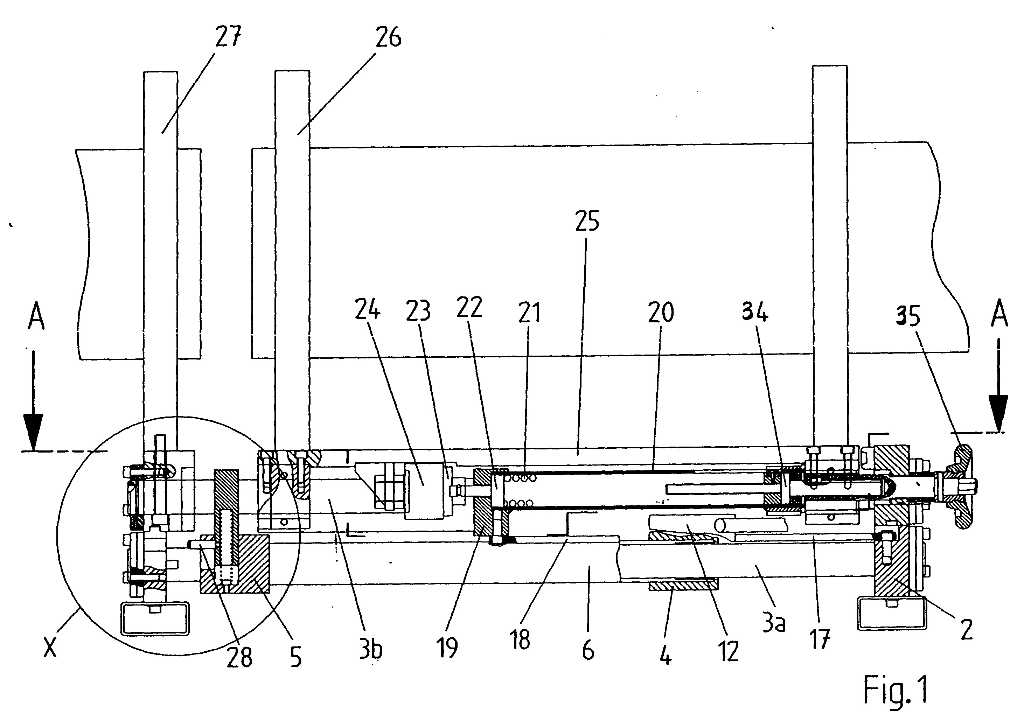

In Fig.1 ist eine Heizelementstumpfschweissmaschine 1 zum Verbinden zweier rohrförmiger Teile im Schnitt gezeigt. An einem Maschinengestell 2 sind je zwei parallele Führungsstangen 3a und 3b mit diesem fest verbunden. Auf den oberen Führungsstangen 3b befindet sich ein auf diesen verschiebbarer oberer Schlitten 25. Auf diesem Schlitten 25 sind zwei Rohreinspannvorrichtungen 26 fest verbunden. Am Gestell 2 ist auf der dem oberen Schlitten 25 entgegengesetzten Seite eine Rohreinspannvorrichtung 27 angebracht. Auf den unteren Führungsstangen 3a befindet sich ein auf diesen verschiebbarer unterer Schlitten 4. Dieser Schlitten 4 ist fest mit einem Gerätehalter 5 über Hülsen 6, welche über die unteren Führungsstangen 3a aufgeschoben sind, verbunden.

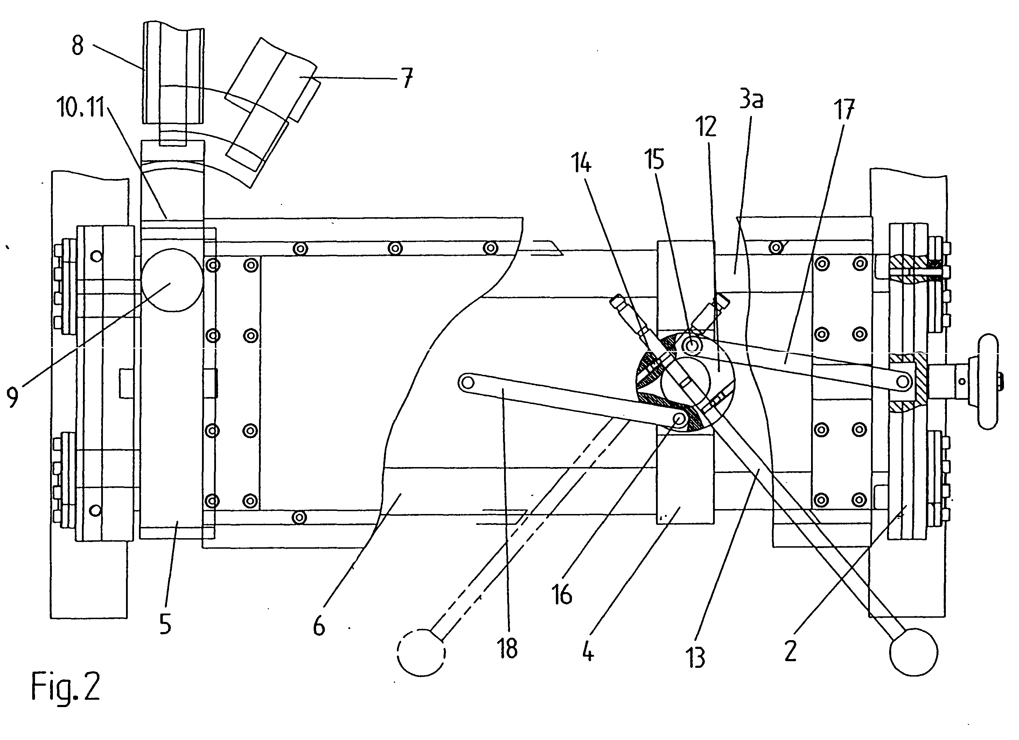

Auf diesem Gerätehalter 5 ist wie aus Fig.2 ersichtlich, eine Hobeleinrichtung 7 und ein Heizelement in Form eines Heizspiegels 8 drehbar durch die Gelenkeinheit 9 verbunden. Die Gelenkeinheit 9 erlaubt ein Verschwenken um eine vertikale Achse, um nach Bedarf die Hobeleinrichtung 7 oder den Heizspiegel 8 in senkrechte Position zu den zu verschweissenden Rohren zu stellen. Um die Hobeleinrichtung 7 und den Heizspiegel 8 in die Arbeitsposition, also zwischen beide Rohre, zu schwenken, ist eine zweite Gelenkeinrichtung 10 angeordnet, deren Drehachse 11 parallel zu den Führungsstangen 3 liegt.

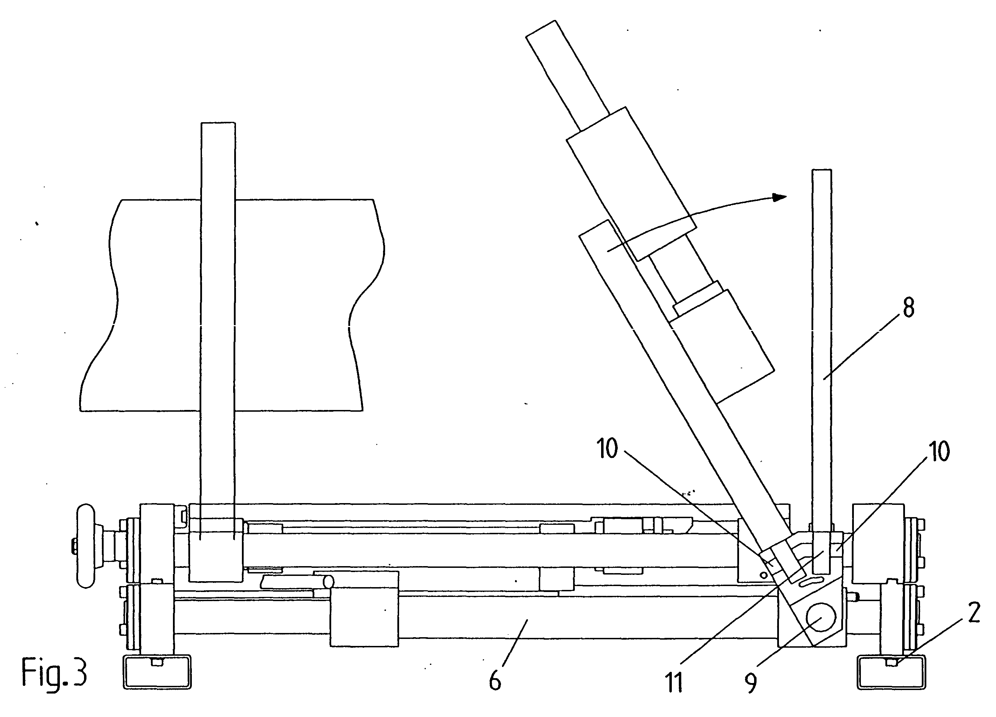

In Fig.3 wird eine weitere Ausführungsvariante gezeigt, um den Heizsspiegel 8 und die Hobeleinrichtung 7 in Arbeitsstellung einzuschwenken. In diesem Beispiel erlaubt die Gelenkeinheit 9 ein Verschwenken um eine horizontale Achse, um nach Bedarf die Hobeleinrichtung 7 oder den Schweissspiegel 8 in senkrechte Position zu den zu verschweissenden Rohren zu stellen. Dies ermöglicht eine kompakte Bauweise.

Auf dem unteren Schlitten 4 ist mittig ein Drehteller 12 (Fig.2) drehbar angeordnet. Durch den Drehteller 12 ist ein Handhebel 13 eingesteckt. Dieser wird durch Einrastvorrichtungen 14 gehalten. Der Handhebel 13 kann durch einfaches Herausziehen aus dem Drehteller 12 entnommen werden und auf der gegenüberliegenden Seite wieder eingesteckt werden. An dem Drehteller 12 sind über Bolzen 15 und 16 zwei Streben 17 und 18 gelenkig verbunden. Die eine Strebe 17 ist mit dem Maschinengestell 2 und die andere Strebe 18 ist mit einem Mitnehmerteil 19 gelenkig verbunden. Diese Anordnung entspricht einer Doppelkniehebelanordnung.

Anhand Fig.1 wird nun der obere Aufbau der Maschine erläutert. An dem Mitnehmerteil 19 ist eine Hülse 20 fest mit diesem verbunden. In dieser Hülse 20 befindet sich eine Druckfeder 21. Diese stützt sich mit ihrem vorderen Ende an einem Schieberteil 22 mit einem Anpressstempel 23, welcher durch das Mitnehmerteil 19 verschiebbar angeordnet ist, ab. Auf der gegenüberliegenden Seite stützt sich die Druckfeder 21 an einem Einstellteil 34 ab. Die Lage des Einstellteiles 34 ist durch Drehen eines Handrades 35 veränderlich. Dadurch wird die Druckfeder 21 um einen bestimmten Weg zusammengedrückt und kann somit auf eine bestimmte Kraft eingestellt werden.

Der Anpressstempel 23 liegt: beim Verschwenken des Handhebels 13 an einer Kraftmessdose 24 an. Diese Kraftmessdose 24 kann beispielsweise mechanisch, hydraulisch oder über Dehnmessstreifen Kräfte messen. Die Kraftmessdose 24 ist fest mit einem oberen Schlitten 25 verbunden, welcher auf den Führungsschienen 3b verschiebbar angeordnet ist. Das Messergebnis aus der Kraftmessung wird an einer Anzeigevorrichtung angezeigt. Das aus der Messung gewonnene Signal kann beispielsweise für eine Dokumentation weiterverarbeitet werden.

Wird nun der obere Schlitten 25 durch den Handhebel 13 über die Doppelkniehebelanordnung verschoben, drückt der Anpressstempel 23 auf die Kraftmessdose 24. Der obere Schlitten 25 drückt das in den Rohreinspannvorrichtungen 26 eingespannte Rohr gegen das in der Rohreinspannvorrichtung 27 eingespannte Rohr. Solange die Anpresskraft kleiner als die Druckfederkraft ist, bleibt der Anpressstempel 23 in seiner Lage. Erst wenn die Anpresskraft gleich der Druckfederkraft ist, gleitet der Anpressstempel 23 im Mitnehmerteil 19 und presst die Druckfeder 21 minimal zusammen. Jetzt drückt nur noch die Druckfeder 21 auf die mit dem oberen Schlitten 25 fest verbundene Kraftmessdose, die am Handhebel 13 anliegende Kraft ist somit abgekoppelt. Diese Handhebelkraft könnte beliebig erhöht werden, die Anpresskraft der zu verschweissenden Teile bleibt konstant. Auch ein Nachregulieren der Anpresskraft beim Fügen entfällt, denn bei einem Druckabfall während des Fügens wirkt immer die gleiche Druckfederkraft.

Zum Einstellen der Druckfederkraft wird zunächst die für die Schweissverbindung notwendige Anpresskraft ermittelt. Diese ist von der Rohrdimension und dem Rohrmaterial abhängig. Danach wird der Handhebel 13 in seine Endlage bzw. Totpunktlage der Doppelkniehebelanordnung gedrückt, beide Schweissteile sind aneinandergepresst. Nun wirkt eine willkürliche Antriebskraft auf den Schlitten. Diese Kraft wird an der Anzeigevorrichtung abgelesen und durch Verstellen am Handrad 35 die Federkraft erhöht oder erniedrigt, bis der abgelesene Wert dem gewünschten entspricht. Dieser entspricht der Summe aus vorgeschriebener Fügekraft, der bei gleichmässiger Schlittenbewegung auftretenden Reibkraft und der Schleppkraft des Rohres. Dieses Verfahren kann einem Eichen gleichgesetzt werden. Wenn immer die gleichen Verhältnisse vorliegen und gleiche Rohrdimensionen miteinander verschweisst werden, muss dieser Einstellvorgang nur bei der ersten Schweissung erfolgen.

Die Druckfeder 21 weist vorzugsweise eine flache Federkennlinie auf. Wird die Druckfeder 21 um einen bestimmten Betrag zusammengedrückt, wird die Kraft nur unwesentlich verändert. Da bei dieser Ausführung der Heizelementschweissmaschine 1 beim obengenannten Abkoppelvorgang die Druckfeder 21 nur minimal zusammengepresst wird, ist die dadurch verursachte Kraftänderung vernachlässigbar.

Wie schon erwähnt, wird die am Handhebel 13 anliegende Kraft durch die Druckfederkraft abgekoppelt. Damit aber der Anpressstempel 23 im Mitnehmerteil 19 keinen grossen Bewegungsweg ausführt, müssen die Fügeteile auf ein definiertes Abstandsmass zusammengefahren werden. Deshalb ist am Gerätehalter 5 ein Anschlag 28 angeordnet.

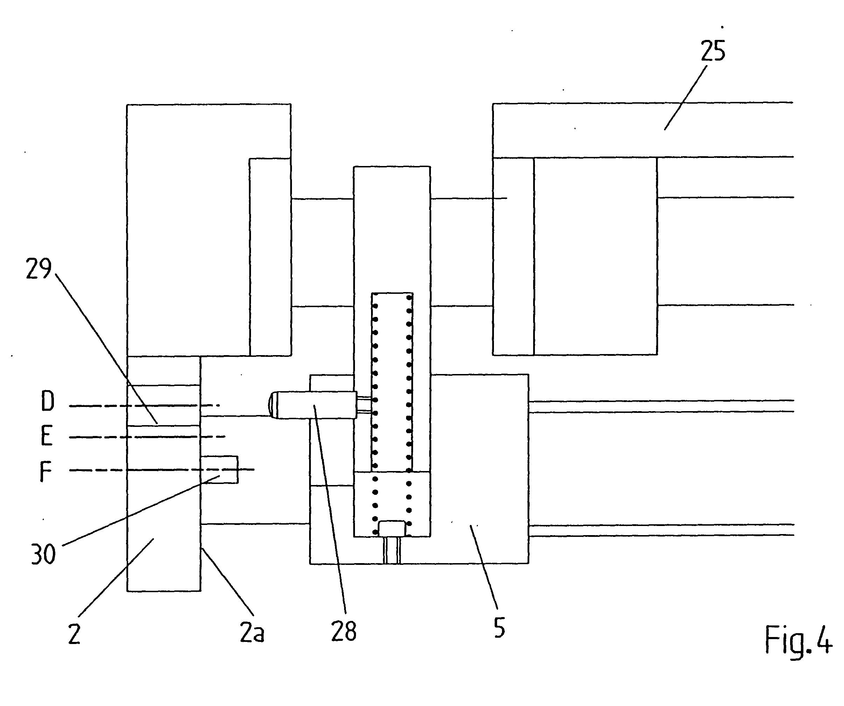

In Fig.4 wird die Wirkungsweise des Anschlages 28 näher erläutert. Die Arbeitsgeräte 7 und 8, die für die Schweissung benötigt werden, weisen unterschiedliche Baumasse auf. Der Anschlag 28 stützt sich in Endlage bzw. Arbeitslage je nach Arbeitsgang an unterschiedlichen Stellen am Gestell 2 ab. In der Stellung D, z.B. beim Fügen, ist der Anschlag ausser Funktion. Der Anschlag 28 wird in eine Öffnung 29 geführt, die grösser als der Anschlag ist. In der Stellung E ist der Heizspiegel 8 in Arbeitsstellung eingeschwenkt:, der Anschlag 28 stösst gegen die Gestellfläche 2a. In der Stellung F ist die Hobeleinrichtung 8 in Arbeitsposition eingeschwenkt, der Anschlag 28 stösst auf einen Vorsprung oder einer Anschlagschraube 30, welche an der Gestellfläche 2a angeordnet ist.

Somit wird in den verschiedenen Arbeitsstellungen gewährleistet, dass der Anpressstempel 23 im Mitnehmerteil 19 keinen grossen Bewegungsweg ausführt und dennoch ein Abkoppeln der Handkraft erfolgt. Zudem muss der Benutzer mit dem Handhebel nur auf Anschlag fahren, ein genaues Einstellen entfällt.

Das über den Handhebel 13 geführte Mitnehmerteil 19 muss beim Fügen kurz nach dem Abkoppeln der Handkraft in eine Endlage gelangen. Dies wird durch die doppelte Kniehebelanordnung des Drehtellers 12 mit den Streben 17 und 18 erreicht. Durch die Totpunktlage der Doppelkniehebelanordnung gelangt das Mitnehmerteil 19 an eine definierte Stelle. Zudem ist durch die Hebelverhältnisse ein optimaler Kraftverlauf für den Anwender vorhanden, um die erforderlichen Kräfte aufzubringen. Durch die Doppelkniehebelanordnung wird weiterhin erreicht, dass der untere Schlitten 4 gegenüber dem oberen Schlitten 25 die halbe Verschiebebewegung durchführt. Da auf dem unteren Schlitten 4 die Hobeleinrichtung 7 und der Heizspiegel 8 angeordnet sind, müssen diese Geräte nicht durch einen weiteren Hebel in ihrer Längsrichtung verschoben werden. Sie sind in Längsrichtung immer in Arbeitsposition.

Nach dem Angleichen muss der Heizspiegel 8 ohne Berühren von der Schweissfläche entfernt werden. Da beim Zurückziehen des Handhebels 13 beim Umstellen der Heizspiegel 8 automatisch weggefahren wird, verkürzt sich die Umstellzeit erheblich. Daraus ergibt sich eine kürzere Einwirkzeit der Umgebungsluft auf die erwärmten Schweissflächen, die Schweissqualität wird gesteigert. Ein Berühren bzw. Streifen des Heizspiegels 8 an den zu verschweissenden Teilen kann auch versehentlich nicht erfolgen, da der Heizspiegel 8 beim Zurückziehen des Handhebels durch die Doppelkniehebelanordnung und die Schlittenanordnung zwangsgeführt ist und somit immer von den erwärmten Rohrenden in Rohrlängsrichtung weggeführt wird.

Die Schlitten 4 und 25 werden wie beschrieben über ein einfach aufgebautes mechanisches Hebelsystem verschoben. Dadurch ist es problemlos möglich, einen umsteckbaren Hebel 13 anzuordnen. Da auch die Hobeleinheit 7 und der Heizspiegel 8, die auf dem Geräteträger 5 angeordnet sind, auf die gegenüberliegenden Seite gewechselt werden können, kann mit dieser Vorrichtung auch bei beengten Platzverhältnissen geschweisst werden. Dazu werden die Hobeleinheit 7 und der Heizspiegel 8 sowie der Handhebel 13 in einer geeigneten Position angeordnet. Da zudem die Schweissstelle im Bereich des Geräteträgers 5 liegt, also im Aussenbereich der Heizelementschweissmaschine 1, kann unter Umständen die Schweissung nahe einer Wand erfolgen. Für den Einsatzfall, dass eine Rohrhalteeinrichtung 27 des dem Schlitten gegenüberliegenden Aussenbereiches der Schweissmaschine nicht ausreichen sollte, kann eine weitere Rohrhalteeinrichtung über ein Adaptersystem an der Schweissmaschine angeordent werden.

Der Aufbau der beschriebenen Heizelementschweissmaschine kann auch auf eine Muffenschweissmaschine übertragen werden. Der Heizspiegel 8 weist dann an einer Planfläche einen Heizstutzen und auf der anderen Seite eine Heizbüchse auf. Die Hobeleinrichtung 7 wird dann nicht benötigt.

## Patentansprüche

1. Anordnung zum Verschweissen von rohrförmigen Teilen aus thermoplastischem Kunststoff, insbesondere Heizelementstumpfschweissmaschine, auf welcher Aufnahmespannvorrichtungen (26,27) angeordnet sind und die rohrförmigen Teile über mindestens einen Schlitten (25) und eine Einrichtung zum Verschieben des mindestens einen Schlittens (25) zusammenfahrbar, an einem Heizelement (8) mit einer vorbestimmten Angleichkraft angleichbar, mit eine vorbestimmten Anwärmkraft an dem Heizelement (8) anwärmbar und anschliessend miteinander mit einer vorbestimmten Fügekraft verschweissbar sind, gekennzeichnet durch Mittel zum Aufbringen einer einstellbaren Vorspannkraft vom Gestell (2) direkt auf den Schlitten (25), welche Mittel beirn Zusammenfahren und -Drücken der rohrförmigen Teile mit der bestimmten Vorspannkraft den Schlitten von der Einrichtung zum Verschieben des Schlittens (25) kräftemässig abkoppeln, wobei die Vorspannkraft über ein Schieberteil (22) auf eine Kraftmessdose (24) übertragbar und messbar ist und betragsmässig den vorbestimmten Kräften, insbesondere der Angleich-, Anwärm- und der Fügekraft, entspricht.

2. Anordnung nach Anspruch 1, **dadurch gekennzeichnet**, dass die einstellbare Vorspannkraft durch eine Druckfeder (21) erzeugbar ist.

3. Anordnung nach Anspruch 1 und 2, **dadurch gekennzeichnet**, dass die Druckfeder (21) eine flache Federkennlinie aufweist.

4. Anordnung nach einem der Ansprüche 1 bis 3, **dadurch gekennzeichnet**, dass die Druckfeder durch Änderung der Einbaulage auf eine vorbestimmte Kraft einstellbar ist.

5. Anordnung nach einem der Ansprüche 1 bis 4, **dadurch gekennzeichnet**, dass die Kraftmessdose (24) mechanisch, hydraulisch oder über Dehnmessstreifen Kräfte ermittelt.

6. Anordnung nach einem der Ansprüche 1 bis 5, **dadurch gekennzeichnet**, dass bei einer Kraftmessung an der Kraftmessdose ein elektronisches Ausgangssignal vorliegt.

7. Anordnung nach einem der Ansprüche 1 bis 6, **dadurch gekennzeichnet**, dass der bei der Kraftmessung mittels der Kraftmessdose ermittelte Wert an einer Anzeigevorrichtung anzeigbar ist.

8. Anordnung nach einem der Ansprüche 1 bis 7, **dadurch gekennzeichnet**, dass eine Doppelkniehebelanordnung zum Verschieben des Schlittens (25) angeordnet ist.

9. Anordnung nach Anspruch 8, **dadurch gekennzeichnet**, dass die Doppelkniehebelanordnung ein Mitnehmerteil (19) nach erfolgtem Verschieben des Schieberteiles (22) in eine definierte Endlage drückt.

10. Anordnung nach Anspruch 8 und 9, **dadurch gekennzeichnet**, dass mittels eines Anschlages (28) eine definierte Endlage des Mitnehmerteiles (19) nach dem erfolgten Verschieben des Schieberteiles (22) festlegbar ist.

11. Anordnung nach einem der Ansprüche 8 bis 10, **dadurch gekennzeichnet**, dass mittels der Doppelkniehebelanordnung der untere Schlitten 4 gegenüber dem oberen Schlitten 25 im Verhältnis 1:2 verschiebbar ist.

12. Anordnung nach einem der Ansprüche 8 bis 11, **dadurch gekennzeichnet**, dass ein Handhebel (13) und ein Gerätehalter (5) beidseits des Gestelles (2) beliebig anbringbar sind.

13. Anordnung nach einem der Ansprüche 1 bis 12, **dadurch gekennzeichnet**, dass eine weitere Rohrhalteeinrichtung über ein Adaptersystem an dieser anbringbar ist.

14. Verwendung der Anordnung nach einem der Ansprüche 1 bis 13, für die Herstellung von Verbindungen von rohrförmigen Teilen aus thermoplastischen Kunststoffen

## Claims

1. Arrangement for welding tubular parts made of thermoplastic material, in particular a heating-element butt-welding machine, on which receiving clamping devices (26, 27) are arranged and the tubular parts can be moved together by means of at least one slide (25) and a device for displacing the at least one slide (25), can be brought into contact with a heating element (8) with a predetermined contact force, can be heated up on the heating element (8) with a predetermined heating-up force and, finally, can be welded to each other with a predetermined joining force, characterized by means for applying an adjustable prestressing force from the framework (2) directly to the slide (25), which means decouple the slide from the device for displacing the slide (25) in terms of force transmission for the operation of moving and pressing the tubular parts together with the determined prestressing force, the prestressing force being able to be transferred via a slide part (22) to a load cell (24) and to be measured, and corresponding in its amount to the predetermined forces, in particular the contact force, heating-up force and joining force.

2. Arrangement according to Claim 1, **characterized in that** the adjustable prestressing force can be produced by a compression spring (21).

3. Arrangement according to Claims 1 and 2, **characterized in that** the compression spring (21) has a flat spring characteristic.

4. Arrangement according to one of Claims 1 to 3, **characterized in that** the compression spring can be adjusted to a predetermined force by changing the mounting position.

5. Arrangement according to one of Claims 1 to 4, **characterized in that** the load cell (24) determines forces mechanically, hydraulically or by means of strain gauges.

6. Arrangement according to one of Claims 1 to 5, **characterized in that** a force measurement at the load cell produces an electronic output signal.

7. Arrangement according to one of Claims 1 to 6, **characterized in that** the value determined in the force measurement by means of the load cell can be displayed on a display device.

8. Arrangement according to one of Claims 1 to 7, **characterized in that** a double toggle lever arrangement is arranged for displacing the slide (25).

9. Arrangement according to Claim 8, **characterized in that** the double toggle lever arrangement presses a carrier part (19) into a defined end position once the displacement of the slide part (22) has taken place.

10. Arrangement according to Claims 8 and 9, **characterized in that** a defined end position of the carrier part (19) once the displacement of the slide part (22) has taken place can be fixed by means of a stop (28).

11. Arrangement according to one of Claims 8 to 10, **characterized in that** the lower slide (4) can be displaced with respect to the upper slide (25) in a ratio of 1:2 by means of the double toggle lever arrangement.

12. Arrangement according to one of Claims 8 to 11, **characterized in that** a hand lever (13) and an equipment holder (5) can be attached as desired on both sides of the framework (2).

13. Arrangement according to one of Claims 1 to 12, **characterized in that** a further tube holding device can be attached on the said arrangement by means of an adaptor system.

14. Use of the arrangement according to one of Claims 1 to 13, for producing connections of tubular parts made of thermoplastic materials.

## Revendications

1. Dispositif pour le soudage de pièces tubulaires en matière plastique thermoplastique, en particulier machine de soudage bout à bout par élément chauffant, sur lequel sont disposés des dispositifs de montage et serrage (26, 27) et où les pièces tubulaires peuvent être accostées par au moins un chariot (25) et un dispositif pour déplacer le au moins un chariot (25), ajustées sur un élément chauffant (8) avec une force d'ajustage prédéterminée, réchauffées sur l'élément chauffant (8) avec une force de réchauffage prédéterminée et ensuite soudées l'une à l'autre avec une force de contact prédéterminée, caractérisé par des moyens pour appliquer une force de préserrage réglable par le châssis (2) directement au chariot (25), moyens qui détachent par force le chariot du dispositif pour déplacer le chariot (25) lors de l'accostage et de l'application par pression des pièces tubulaires avec la force de préserrage déterminée, la force de préserrage pouvant être transmise par une pièce de coulisseau (22) à un capteur dynamométrique (24) et mesurée et correspondant proportionnellement aux forces prédéterminées, en particulier à la force d'ajustage, la force de réchauffage et la force de contact.

2. Dispositif suivant la revendication 1, **caractérisé en ce que** la force de préserrage réglable peut être produite par un ressort de pression (21).

3. Dispositif suivant la revendication 1 ou 2, **caractérisé en ce que** le ressort de pression (21) présente une caractéristique élastique plate.

4. Dispositif suivant l'une quelconque des revendications 1 à 3, **caractérisé en ce que** le ressort de pression est réglable à une force prédéterminée par une modification de la position de montage.

5. Dispositif suivant l'une quelconque des revendications 1 à 4, **caractérisé en ce que** le capteur dynamométrique (24) détermine les forces par voie mécanique, hydraulique ou au moyen de jauges d'extension.

6. Dispositif suivant l'une quelconque des revendications 1 à 5, **caractérisé en ce qu**'un signal électronique de sortie est présent au capteur dynamométrique lors d'une mesure de force.

7. Dispositif suivant l'une quelconque des revendications 1 à 6, **caractérisé en ce que** la valeur déterminée lors de la mesure de force au moyen du capteur dynamométrique peut être affichée sur un dispositif d'affichage.

8. Dispositif suivant l'une quelconque des revendications 1 à 7, **caractérisé en ce qu**'un dispositif à levier à double genouillère est prévu pour le déplacement du chariot (25).

9. Dispositif suivant la revendication 8, **caractérisé en ce que** le dispositif de levier à double genouillère presse une pièce d'entraînement (19) après l'accomplissement du déplacement de la pièce de coulisseau (22) dans une position finale définie.

10. Dispositif suivant la revendication 8 ou 9, **caractérisé en ce qu**'une position finale définie de la pièce d'entraînement (19) après l'accomplissement du déplacement de la pièce de coulisseau (22) peut être fixée au moyen d'une butée (28).

11. Dispositif suivant l'une quelconque des revendications 8 à 10, **caractérisé en ce que** le chariot inférieur (4) peut être déplacé par rapport au chariot supérieur (25) dans un rapport de 1:2 au moyen du dispositif de levier à double genouillère.

12. Dispositif suivant l'une quelconque des revendications 8 à 11, **caractérisé en ce qu**'un levier manuel (13) et un porte-appareil (5) peuvent être installés à volonté de part et d'autre du châssis (2).

13. Dispositif suivant l'une quelconque des revendications 1 à 12, **caractérisé en ce qu**'un dispositif supplémentaire de maintien des tubes peut y être installé par un système d'adaptateur.

14. Utilisation du dispositif suivant l'une quelconque des revendications 1 à 13, pour la fabrication d'assemblages de pièces tubulaires en matières plastiques thermoplastiques.
